# EUROPÄISCHE PATENTSCHRIFT

(11) **EP 1 910 016 B1**
(45) Veröffentlichungstag und Bekanntmachung des Hinweises auf die Patenterteilung: **14.06.2017**
(21) Anmeldenummer: 06762733.1
(22) Anmeldetag: 20.07.2006
(51) Int. Cl.: B23K 26/14, B23K 35/00, B23K 9/16, B23K 31/02

(54) **EINBRINGEN VON NANOPARTIKELN**
INTRODUCTION OF NANOPARTICLES
INTRODUCTION DE NANOPARTICULES

(30) Priorität: 02.08.2005 DE 102005036309
(43) Veröffentlichungstag der Anmeldung: 16.04.2008
(73) Patentinhaber: Linde AG, 80331 München (DE)
(72) Erfinder: DANZER, Wolfgang, 84405 Dorfen (DE)
(74) Vertreter: Gellner, Bernd
(86) Internationale Anmeldenummer: PCT/EP2006/007180
(87) Internationale Veröffentlichungsnummer: WO 2007/014648

(56) Entgegenhaltungen:
- DE-A1- 3 811 127

## Beschreibung

Die Erfindung betrifft ein Verfahren zum Fügen von Gegenständen nach dem Oberbegriff des Anspruchs 1.

Die Fügeverfahren für Metalle mittels Erwärmung, wie Schweißen und Löten, sind gut bekannt. Stets wird, entweder durch elektrische Energie, durch Verbrennung, durch einen Lichtbogen, durch Laser, durch Reibung oder anderweitig Wärme in die Fügestelle eingebracht, wodurch entweder eines oder beides der zu verbindenden Metalle schmelzen oder wobei ein Lot zum Schmelzen gebracht wird, welches eine innige Verbindung der zu verbindenden Teile bewirkt. Diese Prozesse können sehr gut beeinflusst werden, wenn Nanopartikel in die Fügezone eingebracht werden.

Beim Schweißen von Kunststoffen oder beim Fügen von Keramiken sind naturgemäß andere Temperaturbereiche einzuhalten als bei Metallen.

Aus der US 2004/0050913 A1 ist ein Lötverfahren bekannt, bei dem das Lot Nanopartikel enthält. Dieses Lot wird wie üblich mechanisch auf die Verbindungsstelle aufgebracht und dann durch Erhitzen geschmolzen.

Aus der US 2004/0245648 A1 ist ein Fügeverfahren bekannt, welches beim Hochtemperaturlöten verwendet wird. Im Lot sind Nanopartikel enthalten. Dieses Lot wird ebenfalls wie üblich mechanisch aufgebracht.

Aus der US 6,428,596 und aus der US 6,674,047 sind Pulver bekannt, die beim thermischen Spritzen oder beim Schweißen verwendet werden können. Diese Pulver enthalten ebenfalls Nanopartikel. Das Aufbringen der Nanopartikel erfolgt, wie bei thermischen Spritzen üblich, durch einen Luft- oder Gasstrom, der die heißen Partikel zur Fügestelle bringt.

Bei all diesen Verfahren wirken die Nanopartikel insofern, als sie die Physik im Fügebereich besonders verändern. Durch die Anwesenheit der Nanopartikel werden positive physikalische Eigenschaften in dem Prozess initiiert.

Aufgabe der Erfindung ist es, eine alternative Form der Einbringung wirksamer Stoffe vorzuschlagen.

Diese Aufgabe wird erfindungsgemäß gelöst von einem Verfahren mit den Merkmalen des Anspruchs 1. Ausführungen der Erfindung sind Gegenstände von Unteransprüchen.

Erfindungsgemäß wird ein Gasstrom verwendet, der gasförmige Verbindungen zur Fügestelle bringt, die dann bei der erhöhten Temperatur an der Fügestelle zerfallen und dabei Partikel, wie Nanopartikel (also Feststoffe), aber auch einzelne Atome, Moleküle, Elemente oder Ionen abscheiden. Erfindungsgemäß wird also auf die an sich bekannten Verfahren zum Zuführen von Schutzgas zur Fügestelle zurückgegriffen, jedoch wird hier kein Prozessgas verwendet, welches bisher "wirklich" gasförmig ist und auch gasförmig bleibt, sondern ein Gas, welches Stoffe enthält, die Feststoffe abscheiden. Der Gasstrom kann Luft, Stickstoff, Edelgase, inerte öder reaktive Gase (CO₂) als Trägerkomponente(n) enthalten. Diese Phasenumwandlung durch erhöhte Temperatur ist ein für Fügeverfahren absolut neuer Prozess. Bisher wurden die Feststoffe, wie der Stand der Technik zeigt, mechanisch eingebracht oder mittels eines Gasstromes als bereits feste Teilchen (thermisches Spritzen) zur Fügestelle gebracht. Neu ist nun, dass mit einem "echten" Gas begonnen wird, welches ab einer gewissen Temperatur Feststoffe ausscheidet. In einer Ausführung der Erfindung werden metallische Verbindungen verwendet, die Metalle in Gasform enthalten und bei hoher Temperatur das Metall abspalten.

Bevorzugt werden so Metalle, Metallionen oder Elemente wie Silizium und Bor in die Fügestelle eingetragen.

Besonders bevorzugt werden metallorganische Verbindungen verwendet, wie Nickeltetracarbonyl oder Eisenpentacarbonyl, welche sich bei Temperaturen über 200 °C im Fügebereich zu einzelnen Metallatomen zersetzen. Diese bilden dann den Ausgangsstoff für ideale Nanopartikel. Diese können in Lichtbogen- oder Plasmavorgänge eingreifen und hochreaktive Oberflächen bilden. Die Fügevorgänge durch Anpressen werden dann wesentlich verbessert. Erfindungsgemäß ist also ein Transport gasförmiger Metallverbindungen vorgesehen, wobei diese Metallverbindungen bei Umgebungstemperatur im Gasstrom gasförmig sind und bei einer erhöhten Temperatur an den gewünschten Plätzen zerfallen und Partikel oder Atome abscheiden. Sie wirken dort als Nanopartikel oder als aktive dünne Schicht oder auch als Mikrolegierung.

Besonders vorteilhaft ist, dass, wenn das Metall in Gasform eingebracht wird, es sich auch an Stellen freisetzen kann, wo die mit konventionellen Transportprozessen nicht erreichbar sind. So kann das Gas z.B. Hohlräume und Hinterschneidungen leicht erreichen. Solche Stellen sind durch mechanisches Auftragen oder durch Aufspritzen häufig nicht erreichbar.

## Patentansprüche

1. Verfahren zum Fügen von Gegenständen aus Metall, Kunststoff oder Keramik mittels Wärmeeintrag durch Löten oder Schweißen, wobei Stoffe oder Partikel, insbesondere Nanopartikel, Elemente, Atome, Moleküle oder Ionen in die Fügestelle eingebracht werden, **dadurch gekennzeichnet, dass** das Material in der Fügestelle durch Lichtbogen oder Laser zum Schmelzen gebracht wird und dass ein Gasstrom gasförmige Verbindungen zur Fügestelle bringt, die bei erhöhter Temperatur zerfallen und Partikel abscheiden.

2. Verfahren nach Anspruch 1, **dadurch gekennzeichnet, dass** die Verbindungen Metalle enthalten und bei erhöhter Temperatur Metallpartikel, -ionen oder -atome abscheiden.

3. Verfahren nach Anspruch 1 oder Anspruch 2, **dadurch gekennzeichnet, dass** die Verbindungen metallorganisch sind, wie Nickeltetracarbonyl oder Eisenpentacarbonyl.

## Claims

1. Method of joining articles made of metal, plastic or ceramic by means of introduction of heat by soldering or welding, with introduction of substances or particles, especially nanoparticles, elements, atoms, molecules or ions, into the joining site, **characterized in that** the material is caused to melt at the joining site by means of a electric arc or laser, and **in that** a gas stream of gaseous compounds that break down at elevated temperature and deposit particles is brought to the joining site.

2. Method according to Claim 1, **characterized in that** the compounds contain metals and deposit metal particles, ions or atoms at elevated temperature.

3. Method according to Claim 1 or Claim 2, **characterized in that** the compounds are organometallic, such as nickel tetracarbonyl or iron pentacarbonyl.

## Revendications

1. Procédé d'assemblage d'articles en métal, plastique ou céramique par apport de chaleur par brasage ou soudage, des substances ou des particules, notamment des nanoparticules, des éléments, des atomes, des molécules ou des ions, étant introduits dans l'emplacement d'assemblage, **caractérisé en ce que** le matériau dans l'emplacement d'assemblage est fondu par arc électrique ou laser, et **en ce qu'**un courant gazeux introduits des composés gazeux dans l'emplacement d'assemblage, qui se décomposent à température élevée et déposent des particules.

2. Procédé selon la revendication 1, **caractérisé en ce que** les composés contiennent des métaux et déposent à température élevée des particules, des ions ou des atomes métalliques.

3. Procédé selon la revendication 1 ou la revendication 2, **caractérisé en ce que** les composés sont métallo-organiques, tels que le tétracarbonyle de nickel ou le pentacarbonyle de fer.
